# EUROPÄISCHE PATENTSCHRIFT

(11) **EP 2 365 940 B1**
(45) Veröffentlichungstag und Bekanntmachung des Hinweises auf die Patenterteilung: **29.11.2017**
(21) Anmeldenummer: 09799605.2
(22) Anmeldetag: 15.12.2009
(51) Int. Cl.: C02F 1/28, B01J 39/14, B01J 20/10, B01J 20/12, C02F 101/38

(54) **VERFAHREN ZUR AUFARBEITUNG STICKSTOFFBELASTETER ABWÄSSER**
METHOD FOR PROCESSING WASTE WATER LOADED WITH NITROGEN
PROCÉDÉ DE RETRAITEMENT D'EAU USÉE CHARGÉE EN AZOTE

(30) Priorität: 15.12.2008 DE 102008062299
(43) Veröffentlichungstag der Anmeldung: 21.09.2011
(73) Patentinhaber: Süd-Chemie IP GmbH & Co. KG, 80333 München (DE)
(72) Erfinder: RUF, Friedrich, 84184 Tiefenbach-Ast (DE); KUMMER, Gerhard, 84103 Postau (DE); BURGFELS, Götz, 83043 Bad Aibling (DE); FRAUENRATH, Manfred, 83109 Grosskarolinenfeld (DE); LAUTENSCHLAGER, Johannes, 83043 Bad Aibling (DE)
(74) Vertreter: Clariant Produkte (Deutschland) GmbH
(86) Internationale Anmeldenummer: PCT/EP2009/067189
(87) Internationale Veröffentlichungsnummer: WO 2010/076195

(56) Entgegenhaltungen:
- WO-A1-2006/082997
- DE-A1- 4 446 122
- DE-A1- 19 748 000
- JP-A- 2004 344 808
- US-A- 5 169 536
- US-A- 5 632 899
- US-A1- 2004 007 533
- ROZIC M ET AL: "Ammoniacal nitrogen removal from water by treatment with clays and zeolites" WATER RESEARCH, ELSEVIER, AMSTERDAM, NL, Bd. 34, Nr. 14, 1. Oktober 2000 (2000-10-01), Seiten 3675-3681, XP004228649 ISSN: 0043-1354

## Beschreibung

Die Erfindung betrifft ein Verfahren zur Reinigung eines mit stickstoffhaltigen Verbindungen belasteten Abwassers, das aus einer Synthese eines Zeolithen erhalten worden ist.

Rozic et al ("ammoniacal nitrogen removal from water by treatment with clays and zeolites", WATER RESEARCH, ELSEVIER, Bd. 34, Nr. 14, Seiten 3675-3681) beschreibt die Abtrennung von Ammoniumionen (N-NH₄⁺) aus wässrigen Lösungen mit Hilfe von natürlichen Tonmineralien und Zeolithen.

In DE 197 48 000 A1 wird ein Verfahren offenbart, durch das mit Ammonium hochbelastete Prozessabwässer auf dem Abwassergebiet mit nitrifizierenden Mikroorganismen in Gegenwart einer suspendierten Trägersubstanz mit einer spezifischen Oberfläche von >20 m²/g behandelt werden.

US 5,169,536 A beschreibt die Entgiftung von Wasser, das tensidbasierte Biozide aufweist. Hierzu wird eine Mischung eines Bentoniten und Alkylnaphthalinsulfonat verwendet.

Zeolithe sind kristalline Silikate, deren Kristallgitter aus SiO₄- und AlO₄-Tetraedern aufgebaut sind, die über Sauerstoffbrücken verknüpft sind. Dabei entsteht eine räumliche Anordnung gleich gebauter Hohlräume, die über Fenster bzw. Kanäle zugänglich sind, die untereinander die gleiche Größe aufweisen. Ein derartiges Kristallgitter vermag gleichsam als Sieb zu wirken, welches Moleküle mit kleinerem Querschnitt als die Porenöffnungen in die Hohlräume des Gitters aufnimmt, während größere Moleküle nicht eindringen können. Zeolithe werden deshalb oft auch als Molekularsiebe bezeichnet. Die zum Ausgleich der negativen Ladung der AlO₄-Tetraeder im Alumosilicatgerüst notwendigen Kationen sind im hydratisierten Gitter relativ beweglich und können leicht gegen andere Metallionen ausgetauscht werden. Zeolithe können daher auch als Ionenaustauscher wirken.

Zeolithe werden in zahlreichen technischen Anwendungen eingesetzt. Beispielhafte Anwendungen sind in Waschmitteln zum Enthärten des Waschwassers, als Katalysator in chemischen Reaktionen oder auch als Trennmittel für Gasgemische, beispielsweise in der Petrochemie.

Bei der Herstellung von Zeolithen werden geeignete Silizium- und Aluminiumverbindungen unter alkalischen Bedingungen umgesetzt. Die Reaktion wird meist bei erhöhter Temperatur durchgeführt, ggf. unter autogenem Druck. Die Reaktionszeiten reichen von wenigen Stunden bis hin zu mehreren Tagen.

Meist erfolgt die Synthese von Zeolithen unter hydrothermalen Bedingungen. Dabei wird eine reaktive Alkaliquelle, eine Siliziumquelle und eine Aluminiumquelle sowie gegebenenfalls Impfkristalle zu einem Gel umgesetzt. Dieses Gel wird anschließend in einem Autoklaven unter autogenem Druck reagieren gelassen. Als reaktionsfähige Ausgangsstoffe werden als Siliziumquelle beispielsweise Natriumwasserglas oder Kieselgel eingesetzt und als Aluminiumquelle beispielsweise Aluminiumhydroxid oder Natrium-aluminat.

Einige Zeolithe bilden sich direkt aus den Ausgangsstoffen. Bei vielen Zeolithen, beispielsweise MFI-Zeolith, werden der Reaktionsmischung jedoch noch strukturdirigierende Verbindungen zugesetzt, um die Ausbildung der gewünschten Struktur zu unterstützen. Diese Template nehmen während der Kristallisation des Zeoliths die Position der Poren ein und unterstützen so die Ausbildung der gewünschten Kristallstruktur. Als Template werden meist organische Kationen eingesetzt, im Allgemeinen Amine oder quaternäre Ammoniumverbindungen. Das Templat wird der Reaktionsmischung gewöhnlich im Überschuss zugesetzt. Nach der Synthese wird der Zeolith von der Mutterlauge abgetrennt, gewaschen und calciniert, um das Templat aus den Poren des Zeoliths zu entfernen.

Die bei der Zeolithsynthese anfallende Mutterlauge sowie das Waschwasser sind stark alkalisch und enthalten größere Mengen des Templats.

Wegen ihres hohen Stickstoffgehalts müssen die bei der Zeolithsynthese anfallenden Abwässer erst aufgearbeitet werden, ehe sie beispielsweise in eine Kläranlage mit biologischer Klärstufe oder auch direkt in ein Oberflächengewässer eingeleitet werden können. Die Abwässer wirken sonst stark eutrophierend und belasten damit die Umwelt sehr. Problematisch ist hierbei insbesondere die schlechte biologische Abbaubarkeit von quaternären Stickstoffverbindungen.

Es sind bereits verschiedene Verfahren zur Aufarbeitung derartiger stickstoffhaltiger Abwässer entwickelt worden.

So werden die Abwässer beispielsweise in Verbrennungsanlagen verbrannt, was einen hohen Energieaufwand bedeutet und entsprechende Kosten nach sich zieht. Eine weitere Möglichkeit besteht darin, die im Abwasser enthaltenen stickstoffhaltigen Verbindungen zu konzentrieren. Dies ist beispielsweise durch Umkehrosmose oder Destillation bzw. Eindampfen möglich. Derartige Anlagen erfordern hohe Investitionen, sodass sie sich nur bei einem hohen Anfall derartiger Abwässer lohnen. Schließlich kann die bei der Zeolithsynthese anfallende Mutterlauge auch direkt wieder in den Produktionsprozess zurückgeführt werden.

So beschreibt die EP 1 230 157 B1 ein Verfahren zur Herstellung von synthetischen Zeolithen mit MFI-Struktur, wobei die Umsetzung der Ausgangsprodukte in Gegenwart von Impfkristallen durchgeführt wird, die aus einem früheren Ansatz und ohne Abtrennung von der Mutterlauge gewonnen wurden. Bei diesem Verfahren wird also die Mutterlauge für den nächsten Syntheseansatz wieder verwendet. Die von der Mutterlauge abgetrennten Zeolithkristalle werden anschließend gewaschen und dann calciniert. Das beim Waschen anfallende Abwasser wird nicht wieder in den Syntheseprozess zurückgeführt. Da es jedoch noch relativ große Mengen an Templat sowie Salze enthält, kann dieses Abwasser beispielsweise nicht direkt in eine Kläranlage mit biologischer Klärstufe eingeleitet werden.

Der Erfindung lag daher die Aufgabe zugrunde, ein Verfahren zur Reinigung eines mit stickstoffhaltigen Verbindungen belasteten Abwassers zur Verfügung zu stellen, das auch bei kleinen Abwassermengen kostengünstig angewendet werden kann und das eine einfache und effiziente Entfernung der stickstoffhaltigen Verbindungen aus dem Abwasser ermöglicht.

Diese Aufgabe wird mit einem Verfahren mit den Merkmalen des Patentanspruchs 1 gelöst. Vorteilhafte Ausführungsformen des erfindungsgemäßen Verfahrens sind Gegenstand der abhängigen Ansprüche.

Beim erfindungsgemäßen Verfahren werden smektitische Schichtsilikate als Adsorptionsmittel eingesetzt. Es wurde gefunden, dass derartige smektitische Schichtsilikate insbesondere quaternäre Stickstoffverbindungen sehr effizient aus dem Abwasser adsorbieren, sodass nur geringe Mengen an Adsorptionsmittel erforderlich sind, um das Abwasser soweit zu reinigen, dass es zumindest einer Kläranlage mit biologischer Reinigungsstufe zugeleitet werden kann. Die im erfindungsgemäßen Verfahren eingesetzten smektitischen Schichtsilikate lassen sich relativ einfach von der flüssigen Phase abtrennen, beispielsweise durch Filtration, Zentrifugation oder Sedimentation. Durch die Reaktion mit der stickstoffhaltigen Verbindung, insbesondere wenn diese eine Ladung trägt, kann das smektitische Schichtsilikat zum Ausflocken gebracht werden, sodass sich eine gut filtrierbare Suspension ausbildet. Das Verfahren lässt sich mit einfachen Mitteln durchführen, sodass keine besonderen Investitionen auf der apparativen Seite erforderlich sind. Im Wesentlichen genügt beispielsweise ein Rührkessel für die Umsetzung des mit stickstoffhaltigen Verbindungen belasteten Abwassers mit dem smektitischen Schichtsilikat und eine Filtrationsvorrichtung für die Abtrennung des mit stickstoffhaltigen Verbindungen beladenen Tonmaterials. Das Verfahren eignet sich sowohl für die Behandlung großer Mengen an belastetem Abwasser als auch für die Behandlung kleiner Abwassermengen. Das Verfahren lässt sich daher beispielsweise bei einer Zeolithsynthese im industriellen Maßstab einsetzen, wobei hier auch spezielle Vorrichtungen für die Durchführung des Verfahrens vorgesehen werden können, beispielsweise entsprechend groß dimensionierte stationäre Filter sowie Pumpen für den Transport des Abwassers. Es ist aber auch möglich, das erfindungsgemäße Verfahren zur Behandlung sehr kleiner Abwassermengen einzusetzen, wie sie beispielsweise bei einer Synthese im Labor- oder Technikummaßstab anfallen. Hier kann der apparative Aufwand sehr gering gewählt werden und sich beispielsweise auf ein Becherglas mit Rührer sowie einen einfachen Papierfilter beschränken. Das erfindungsgemäße Verfahren ist daher sehr flexibel einsetzbar.

Gegenstand der Erfindung ist daher ein Verfahren zur Reinigung eines mit stickstoffhaltigen Verbindungen belasteten Abwassers aus einer Zeolithsynthese, wobei das mit stickstoffhaltigen Verbindungen belastete Abwasser mit einem smektitischen Schichtsilikat umgesetzt wird, wobei ein mit stickstoffhaltigen Verbindungen beladenes Tonmaterial erhalten wird, und das mit stickstoffhaltigen Verbindungen beladene Tonmaterial abgetrennt wird, wobei ein gereinigtes Abwasser erhalten wird.

Beim erfindungsgemäßen Verfahren wird zunächst ein mit stickstoffhaltigen Verbindungen belastetes Abwasser bereitgestellt. Die Herkunft des Abwassers kann an sich beliebig sein. Bevorzugt werden mit dem erfindungsgemäßen Verfahren jedoch Abwässer gereinigt, wie sie bei chemischen Synthesen anfallen. Derartige Abwässer weisen zwar ggf. relativ hohe Konzentrationen bestimmter Verunreinigungen auf, beispielsweise bestimmter stickstoffhaltiger Verbindungen. Solche Abwässer weisen jedoch oft eine relativ konstante Zusammensetzung auf. Besonders bevorzugt wird das Verfahren zur Reinigung eines Abwassers eingesetzt, das bei einer bestimmten chemischen Umsetzung entsteht, also ehe dieses Abwasser mit einem anderen Abwasser vermischt wird, das bei einer anderen chemischen Umsetzung anfällt und daher eine andere chemische Zusammensetzung aufweist. Bevorzugt wird das Verfahren für die Reinigung von Abwässern eingesetzt, die über längere Zeiträume hinweg regelmäßig anfallen und dabei eine annähernd gleiche Zusammensetzung aufweisen. Besonders bevorzugt wird das erfindungsgemäße Verfahren daher bereits an einer Stelle des Abwasserstroms eingesetzt, der prozesstechnisch nahe an der Entstehung des Abwassers angeordnet ist, also bevor eine Vermischung mit Abwasser anderer Zusammensetzung stattgefunden hat.

Das mit stickstoffhaltigen Verbindungen belastete Abwasser wird dann mit einem smektitischen Schichtsilikat umgesetzt. Dazu wird das smektitische Schichtsilikat zum mit stickstoffhaltigen Verbindungen belasteten Abwasser gegeben. Die Form, in welcher das smektitische Schichtsilikat zum Abwasser gegeben wird, kann dabei zunächst beliebig gewählt werden. Das smektitische Schichtsilikat kann stationär vorgesehen werden, beispielsweise in Form einer Filterschicht oder einer Packung, über welche dann der Abwasserstrom geleitet wird. Bei dieser Ausführungsform sollte das smektitische Schichtsilikat bevorzugt keine oder nur eine geringe Quellfähigkeit aufweisen, da sonst die Filterschicht bzw. die Packung quillt und damit leicht verstopft, sodass ein Filtrat die aus dem smektitischen Schichtsilikat gebildete Schicht kaum oder nicht mehr passieren kann.

Bevorzugt wird das smektitische Schichtsilikat im mit stickstoffhaltigen Verbindungen belasteten Abwasser suspendiert. Bevorzugt wird die Suspension bei dieser Ausführungsform des Verfahrens während der Umsetzung bewegt, beispielsweise mittels eines Rührers. Die Umsetzung wird bevorzugt bei Raumtemperatur durchgeführt. Es ist also nicht notwendig, beispielsweise die Suspension des smektitischen Schichtsilikats zu erwärmen, um eine schnellere oder effizientere Umsetzung zu erreichen. Vorzugsweise wird die Temperatur des Abwassers während der Umsetzung geringer als 60 °C, bevorzugt geringer als 50 °C gewählt. Gemäß einer Ausführungsform wird die Temperatur des Abwassers größer als 10 °C, bevorzugt größer als 15 °C gewählt. Ebenso wird die Umsetzung bevorzugt bei Umgebungsdruck durchgeführt.

Der Fortgang der Umsetzung kann ggf. durch Probennahme verfolgt werden. Vorzugsweise wird die Umsetzung solange durchgeführt, dass zumindest 80 %, bevorzugt zumindest 90 %, besonders bevorzugt zumindest 95 % der im Abwasser enthaltenen stickstoffhaltigen Verbindung vom smektitischen Schichtsilikat gebunden werden. Die geeignete Menge an smektitischem Schichtsilikat kann ggf. durch Vorversuche ermittelt werden. Ggf. kann während der Umsetzung auch noch smektitisches Schichtsilikat nachdosiert werden.

Als Indikator für die Entfernung stickstoffhaltiger Verbindungen aus dem Abwasser kann der CSB-Wert herangezogen werden. Typische CSB-Werte, wie sie beispielsweise in Mutterlaugen aus der Zeolithsynthese ermittelt werden, liegen im Bereich von mehr als 150.000 mg/l O₂. Der CSB-Wert eines Waschwassers, wie es beispielsweise bei der Zeolithsynthese anfällt, liegt im Bereich von 2.000 bis 10.000 mg/l O₂, wobei hier der Fortschritt des Waschvorgangs bzw. die verwendete Waschwassermenge berücksichtigt werden muss. Um ein mit stickstoffhaltigen Verbindungen verunreinigtes Abwasser in eine Kläranlage mit biologischer Reinigungsstufe einleiten zu können, sollte der CSB-Wert auf unter 800 mg/l O₂ abgesenkt werden. Diese Anforderung kann mit dem erfindungsgemäßen Verfahren erfüllt werden. Gemäß einer Ausführungsform wird der CSB-Wert des Abwassers mit dem erfindungsgemäßen Verfahren daher auf weniger als 800 mg/l O₂ verringert. Das gereinigte Abwasser kann dann beispielsweise einer Kläranlage mit biologischer Reinigungsstufe zugeführt werden.

Das mit stickstoffhaltigen Verbindungen beladene Tonmaterial wird dann abgetrennt. Dazu können übliche Verfahren verwendet werden. Beispielsweise kann das Tonmaterial sedimentieren und die überstehende wässrige Phase abdekantiert werden. Es ist aber beispielsweise auch möglich, das Tonmaterial durch Zentrifugieren und Abdekantieren der wässrigen Phase abzutrennen. Bevorzugt wird das Tonmaterial durch Filtration abgetrennt. Die für die Abtrennung verwendeten Vorrichtungen werden in Abhängigkeit von der zu verarbeitenden Abwassermenge gewählt. Für kleine Mengen ist die Abtrennung beispielsweise mit Hilfe eines Faltenfilters möglich, während für größere Mengen beispielsweise auch Filterpressen eingesetzt werden können.

Nach der Abtrennung des mit stickstoffhaltigen Verbindungen beladenen Tonmaterials wird ein gereinigtes Abwasser erhalten, das dann beispielsweise einer Kläranlage, wie einer Kläranlage mit einer biologischen Klärstufe zugeführt oder, sofern keine weiteren die Umwelt belastenden Stoffe im gereinigten Abwasser enthalten sind, auch direkt in ein Oberflächengewässer eingeleitet werden kann. Das gereinigte Abwasser weist bevorzugt einen pH-Wert von weniger als 10 auf. Gemäß einer Ausführungsform weist das gereinigte Abwasser einen pH-Wert von mehr als 5, gemäß einer weiteren Ausführungsform von mehr als 6 auf.

Es wurde gefunden, dass das smektitische Schichtsilikat eine sehr hohe Affinität zu Stickstoffverbindungen, insbesondere quaternären Stickstoffverbindungen aufweist, und daher eine sehr effiziente Reinigung von Abwässern ermöglicht, welche mit stickstoffhaltigen Verbindungen belastet sind.

Wie bereits ausgeführt, eignet sich das erfindungsgemäße Verfahren insbesondere für die Reinigung von mit stickstoffhaltigen Verbindungen belasteten Abwässern, wie sie beispielsweise bei chemischen Umsetzungen anfallen.

Das erfindungsgemäße Verfahren wird dazu verwendet, quaternäre Alkylammoniumverbindungen aus dem Abwasser abzutrennen. Solche quaternären Ammoniumverbindungen werden beispielsweise als Template in Zeolithsynthesen eingesetzt. Die Struktur der quaternären Ammoniumverbindung kann an sich beliebig gewählt werden, wobei die am Stickstoff gebundenen Alkylgruppen gleich oder verschieden sein können. Es können also sowohl quaternäre Ammoniumverbindungen entfernt werden, welche nur einen Typ einer Alkylgruppe tragen und folglich die Strukturformel NR¹₄X aufweisen, als auch quaternäre Ammoniumverbindungen, die zwei, drei oder vier verschiedene Alkylreste tragen, also eine Strukturform NR¹R²R³R⁴X aufweisen, wobei zwei oder drei der Reste R¹, R², R³, R⁴ auch gleich sein können. Die Reste R¹, R², R³, R⁴ können jeweils Alkylreste mit 1 bis 10 Kohlenstoffatomen sein und geradkettig oder verzweigt sein. Das Anion X- der quaternären Ammoniumverbindung kann an sich ebenfalls beliebig gewählt werden. Bevorzugt ist das Anion der quaternären Ammoniumverbindung ausgewählt aus der Gruppe von Cl⁻, Br⁻, und OH⁻.

Mit dem erfindungsgemäßen Verfahren lassen sich insbesondere auch hydrophile Alkylammoniumverbindungen aus dem Abwasser entfernen. Gemäß einer bevorzugten Ausführungsform trägt die quaternäre Ammoniumverbindung daher Alkylgruppen, die eine Kohlenstoffanzahl von weniger als 6 aufweisen. Es ist zwar bekannt, dass smektitische Schichtsilikate mit Ammoniumverbindungen umgesetzt werden können, sodass beispielsweise organophile Bentonite erhalten werden. Die dazu verwendeten Ammoniumverbindungen tragen jedoch langkettige Alkylreste. Die entsprechenden Ammoniumverbindungen weisen daher deutlich hydrophobe Eigenschaften auf. Um solche hydrophobe Ammoniumverbindungen in eine Lösung überführen zu können, müssen daher Lösungsmittel verwendet werden, die unpolarer als Wasser sind, beispielsweise Mischungen aus Wasser und Alkoholen, wie Ethanol. Mit dem erfindungsgemäßen Verfahren lassen sich auch hydrophile Ammoniumverbindungen aus einer Wasserphase entfernen. Dies gelingt auch in Gegenwart größerer Mengen anderer Ionen, wie Alkalimetallionen oder Aluminaten, wie sie typischerweise in Abwässern enthalten sind, wie sie bei der Synthese von Zeolithen anfallen. Besonders bevorzugt weisen die Alkylgruppen der quaternären Ammoniumverbindungen, welche mit dem erfindungsgemäßen Verfahren aus dem Abwasser entfernt werden sollen, eine Kohlenstoffanzahl zwischen 1 und 4 auf. Bevorzugt sind die Alkylreste R¹, R², R³, R⁴ aus der Gruppe von Methyl-, Ethyl-, Propyl- und Butylgruppe ausgewählt. Eine beispielhafte quaternäre Ammoniumverbindung, die bei der Synthese von Zeolithen eingesetzt wird, sind Tetrapropylammoniumverbindungen, beispielsweise Tetrapropylammoniumbromid.

Bei der praktischen Durchführung des erfindungsgemäßen Verfahrens ist es vorteilhaft, wenn das mit stickstoffhaltigen Verbindungen belastete Abwasser nicht mit zu großen Mengen an smektitischem Schichtsilikat versetzt wird. Bei sehr hohen Mengen an zugegebenem smektitischem Schichtsilikat, d.h. bei sehr hohen Mengen an stickstoffhaltigen Verbindungen im Abwasser, erhält man sonst eine hochviskose Suspension bzw. einen Schlamm, der sich nicht mehr einfach verarbeiten lässt. Die Verwendung sehr großer Mengen an smektitischem Schichtsilikat zur Reinigung einer gegebenen Abwassermenge ist auch unter ökonomischen Gesichtspunkten eher weniger vorteilhaft.

Gemäß einer Ausführungsform wird das Verfahren bevorzugt zur Reinigung von Abwässern eingesetzt, welche keine übermäßige Belastung mit stickstoffhaltigen Verbindungen aufweisen. Solch ein geringer belastetes Abwasser ist beispielsweise ein Abwasser, wie es beim Waschen von Zeolithkristallen anfällt, nachdem diese bei der Zeolithsynthese von der Mutterlauge abgetrennt wurden.

Gemäß einer Ausführungsform eignet sich das Verfahren für die Reinigung eines mit stickstoffhaltigen Verbindungen belasteten Abwassers, wobei der Anteil der stickstoffhaltigen Verbindung im belasteten Abwasser kleiner als 5000 mg/l N, gemäß einer weiteren Ausführungsform kleiner als 800 mg/l N und gemäß einer weiteren Ausführungsform kleiner als 100 mg/l N. Gemäß einer Ausführungsform ist der Anteil der stickstoffhaltigen Verbindung im Abwasser größer als 10 ppm, gemäß einer weiteren Ausführungsform größer als 20 ppm. Die Konzentrationsangaben beziehen sich auf atomaren Stickstoff.

Wie bereits erläutert, wurde gefunden, dass sich mit dem erfindungsgemäßen Verfahren auch stickstoffhaltige Verbindungen aus einem Abwasser entfernen lassen, das größere Mengen anderer Ionen, insbesondere Metallionen, enthält. Solch ein Abwasser stellt insbesondere ein Waschwasser dar, wie es beim Waschen von Zeolithkristallen im Zuge einer Zeolithsynthese anfällt.

Gemäß einer Ausführungsform weist das mit stickstoffhaltigen Verbindungen belastete Abwasser eine Konzentration an Alkalimetallionen, insbesondere Natriumionen oder Kaliumionen auf, die geringer als 15000 mg/l X⁺, bevorzugt geringer als 2000 mg/l X⁺, besonders bevorzugt geringer als 500 mg/l X⁺ ist, wobei X⁺ für Natrium oder Kalium steht, insbesondere Natriumionen. Gemäß einer Ausführungsform ist die Konzentration an Alkalimetallionen im mit stickstoffhaltigen Verbindungen belasteten Abwasser größer als 10 mg/l X⁺, gemäß einer weiteren Ausführungsform größer als 100 mg/l X⁺.

Gemäß einer weiteren Ausführungsform ist die Konzentration an Aluminiumionen, die im mit stickstoffhaltigen Verbindungen belasteten Abwasser enthalten sind, kleiner als 15 mg/l Al³⁺, gemäß einer weiteren Ausführungsform kleiner als 10 mg/l Al³⁺, gemäß einer weiteren Ausführungsform kleiner als 1 mg/l Al³⁺.

Gemäß einer Ausführungsform ist die Konzentration an Aluminiumionen, die im mit stickstoffhaltigen Verbindungen belasteten Abwasser enthalten sind, berechnet als Al³⁺, größer als 100 µg/l, gemäß einer weiteren Ausführungsform größer als 250µg/l. Das erfindungsgemäße Verfahren eignet sich für die Aufarbeitung eines mit stickstoffhaltigen Verbindungen belasteten Abwassers, wie es bei einer Synthese eines Zeoliths erhalten wird.

Das mit stickstoffhaltigen Verbindungen belastete Abwasser kann dabei sowohl Mutterlaugen als auch Waschwasser umfassen, das beispielsweise bei der Reinigung des Zeoliths nach der Synthese anfällt und beispielsweise mit stickstoffhaltigen Templaten belastet ist. Insbesondere wird das Verfahren zur Reinigung eines Waschwassers eingesetzt, wie es bei der Synthese eines Zeoliths anfällt, wenn die Zeolithkristalle nach der Abtrennung von der Mutterlauge gewaschen werden.

Die Synthese der Zeolithe kann dabei an sich in beliebiger Weise durchgeführt worden sein. Allgemein werden dabei eine Siliziumquelle und eine Aluminiumquelle sowie ein organisches Templat, insbesondere ein stickstoffhaltiges organisches Templat unter bevorzugt hydrothermalen Bedingungen miteinander umgesetzt.

Eine geeignete Siliziumquelle ist beispielsweise Fällungskieselsäure. Eine geeignete Aluminiumquelle ist beispielsweise Natriumaluminat. Andere Silizium- bzw. Aluminiumquellen können jedoch ebenfalls verwendet werden.

Wird die Synthese des Zeoliths unter hydrothermalen Bedingungen durchgeführt, wird die Temperatur vorzugsweise im Bereich von 100 bis 180 °C durchgeführt.

Die Synthese des Zeoliths wird vorzugsweise unter alkalischen Bedingungen durchgeführt. Der pH-Wert des wässrigen Gels, welches im Wesentlichen aus der Siliziumquelle, der Aluminiumquelle und dem Templat hergestellt wird, liegt vorzugsweise im alkalischen, bevorzugt im Bereich von 11 bis 13. Das bei der Synthese des Zeoliths anfallende Abwasser weist daher bevorzugt ebenfalls einen alkalischen pH-Wert auf.

Ggf. können dem Gel noch weitere übliche Komponenten beigegeben sein. So kann das Gel beispielsweise auch Impfkristalle enthalten, welche die Ausbildung der gewünschten Zeolithstruktur erleichtern.

Die Anteile der Siliziumquelle und der Aluminiumquelle werden in Abhängigkeit von der Zusammensetzung des zu synthetisierenden Zeoliths gewählt. Gemäß einer Ausführungsform wird das Si/Al-Atomverhältnis größer als 8 gewählt. Gemäß einer Ausführungsform wird das Si/Al-Atomverhältnis zwischen 10 und 100, gemäß einer weiteren Ausführungsform zwischen 12 und 50 gewählt. Das bei der Synthese anfallende Abwasser kann daher auch noch Anteile beispielsweise der Aluminiumquelle und/oder der Siliziumquelle oder auch Natriumhydroxid enthalten.

Das Abwasser enthält als Lösungsmittel bevorzugt Wasser, dem aber auch noch andere Lösungsmittel beigegeben sein können, beispielsweise Alkohole, wie Ethanol. Bevorzugt enthält das Abwasser als Lösungsmittel im Wesentlichen Wasser. Der Anteil nicht wässriger Lösungsmittel im mit stickstoffhaltigen Verbindungen belasteten Abwasser beträgt bevorzugt weniger als 5 Gew.-%, weiter bevorzugt weniger als 1 Gew.-%.

Nach der Umsetzung wird der Zeolith in der üblichen Weise aufgearbeitet. Zunächst werden die entstandenen Zeolithkristalle mit üblichen Methoden von der Mutterlauge abgetrennt. Die Mutterlauge kann ggf. wieder verwendet oder, ganz oder teilweise, nach dem erfindungsgemäßen Verfahren aufgearbeitet werden. Bevorzugt wird die Mutterlauge wieder in den Syntheseprozess zurückgeführt und für einen weiteren Ansatz zur Zeolithsynthese verwendet.

Die Zeolithkristalle können anschließend gewaschen werden, um von noch anhaftender Mutterlauge befreit zu werden. Der Waschschritt kann dabei auch mehrmals wiederholt werden. Das Waschwasser kann dann ebenfalls, ggf. zusammen mit der Mutterlauge aus der Zeolithsynthese, mit dem erfindungsgemäßen Verfahren aufgearbeitet werden. Bevorzugt werden die verschiedenen Fraktionen an Waschwasser, die beim Waschen der Zeolithkristalle anfallen, vereinigt und die Konzentration der in ihnen enthaltenen stickstoffhaltigen Verbindungen mit dem erfindungsgemäßen Verfahren verringert.

Nach dem Waschen wird der Zeolith in üblicher Weise weiter bearbeitet und beispielsweise getrocknet und calciniert.

Als Adsorptionsmittel für die stickstoffhaltigen Verbindungen wird beim erfindungsgemäßen Verfahren ein smektitisches Schichtsilikat eingesetzt. Das smektitische Schichtsilikat ist ein Dreischichtmineral, welches aus Oktaederschichten aufgebaut ist, die beidseitig von Tetraederschichten umgeben sind. Zwischen diesen negativ geladenen Schichten sind austauschfähige Zwischenschichtkationen eingelagert.

Bevorzugt werden im erfindungsgemäßen Verfahren neutrale oder alkalisch aktivierte smektitische Schichtsilikate eingesetzt. unter einem neutralen smektitischen Schichtsilikat wird ein smektitisches Schichtsilikat verstanden, bei welchem eine Suspension von 2 g/10 ml in Wasser einen pH-Wert im Bereich von 6 bis 8, bevorzugt 6,5 bis 7,5 aufweist. Unter einem alkalisch aktivierten smektitischen Schichtsilikat wird ein smektitisches Schichtsilikat verstanden, bei welchem eine Suspension des smektitischen Schichtsilikats von 2 g/ 10 ml in Wasser einen pH-Wert von mehr als 8, bevorzugt im Bereich von 9 bis 12 aufweist. Alkalisch aktivierte smektitische Schichtsilikate werden erhalten, indem ein smekitisches Schichtsilikat mit einer Base, bevorzugt einer Alkalimetallbase, insbesondere bevorzugt Natriumcarbonat umgesetzt wird. Dazu kann das smektitische Schichtsilikat mit einer, vorzugsweise wässrigen Lösung der Base umgesetzt werden. Bevorzugt wird das smektitische Schichtsilikat mit der trockenen Base, insbesondere Natriumcarbonat, verknetet. Die Menge der Base wird bevorzugt so gewählt, dass sie zumindest 60 % der Ionenaustauschkapazität des smektitischen Schichtsilikats entspricht, bevorzugt zumindest 80 %.

Gemäß einer Ausführungsform werden beim erfindungsgemäßen Verfahren bevorzugt smektitische Schichtsilikate verwendet, welche einen hohen Anteil an austauschbaren Alkalimetallionen, insbesondere Natriumionen aufweisen. Gemäß einer Ausführungsform werden zumindest 50 %, bevorzugt zumindest 75 % der Kationenaustauschkapazität des smektitischen Schichtsilikats von Alkalimetallionen gebildet.

Bevorzugt werden basisch aktivierte Schichtsilikate verwendet, die nur geringfügig aktiviert sind. Bevorzugt wird die Menge der Base, insbesondere Natriumcarbonat, daher geringer als 160 %, weiter bevorzugt geringer als 140 % der Ionenaustauschkapazität des smektitischen Schichtsilikats gewählt. Bevorzugt wird im erfindungsgemäßen Verfahren ein smektitisches Schichtsilikat verwendet, das einen Gehalt an mit Ammoniumionen extrahierbaren Natriumionen aufweist, der zwischen 80 und 140 %, bevorzugt zwischen 90 und 130 % der Ionenaustauschkapazität des smektitischen Schichtsilikats beträgt.

In dem erfindungsgemäßen Verfahren werden smektitische Schichtsilikate verwendet, die eine mittlere Ionenaustauschkapazität aufweisen. Bevorzugt werden im erfindungsgemäßen Verfahren smektitische Schichtsilikate verwendet, die eine Ionenaustauschkapazität von 50 bis 75 meq/100 g aufweisen.

Ferner wurde gefunden, dass es vorteilhaft ist, wenn das im erfindungsgemäßen Verfahren verwendete smektitische Schichtsilikat nicht zu stark quillt. Insbesondere sehr hoch aktivierte smektitische Schichtsilikate delaminieren in Wasser nahezu vollständig. Dies kann zum Einen zu einem starken Anstieg der Viskosität des Abwassers führen. Zum Anderen lässt sich ein solches stark delaminiertes smektitisches Schichtsilikat nur schwer wieder vom gereinigten Abwasser abtrennen. Bevorzugt wird im erfindungsgemäßen Verfahren daher ein smektitisches Schichtsilikat verwendet, welches eine Quellfähigkeit in Wasser im Bereich von 15 bis 40 ml/2g aufweist, weiter bevorzugt im Bereich von 20 bis 35 ml/2g.

Ohne an diese Theorie gebunden sein zu wollen, gehen die Erfinder davon aus, dass in einer Suspension eines delaminierten smektitischen Schichtsilikats, das eine Quellfähigkeit im oben beschriebenen bevorzugten Bereich aufweist, noch Aggregate vorhanden sind, die eine größere Anzahl von Schichten umfassen. Reagieren diese Schichtstapel mit der im Abwasser enthaltenen stickstoffhaltigen Verbindung, so bilden sich Mikroflocken aus, die sich dann leicht durch beispielsweise Filtration von der wässrigen Phase abtrennen lassen.

Vorzugsweise werden im erfindungsgemäßen Verfahren smektitische Schichtsilikate eingesetzt, deren spezifische Oberfläche zwischen 30 und 100 m²/g, bevorzugt zwischen 40 bis 70 m²/g gewählt wird. Die spezifische Oberfläche wird nach dem BET-Verfahren gemäß DIN 66131 bestimmt.

Als smektitisches Schichtsilikat wird bevorzugt Bentonit eingesetzt, vorzugsweise ein Bentonit mit einem hohen Montmorillonitgehalt. Der Montmorillonitgehalt des smektitischen Schichtsilikats beträgt vorzugsweise mehr als 60 Gew.-%, bevorzugt mehr als 70 Gew.-%. Die Angabe bezieht sich auf einen wasserfreien Bentonit. Ein Verfahren zur Bestimmung des Montmorillonitgehalts ist bei den Beispielen angegeben.

Das smektitische Schichtsilikat wird dann zu dem mit stickstoffhaltigen Verbindungen belasteten Abwasser gegeben. Die Menge des smektitischen Schichtsilikats ist abhängig von der Menge an stickstoffhaltigen Verbindungen, welche in dem Abwasser enthalten sind. Die benötigte Menge kann ggf. durch entsprechende Vorversuche ermittelt werden. An sich kann die Menge an eingesetztem smektitischen Schichtsilikat aber gering gewählt werden. Gemäß einer Ausführungsform wird das smektitische Schichtsilikat in einer Menge von mehr als 1 g/ 100 ml, vorzugsweise mehr als 1,5 g/ml, bevorzugt mehr als 2 g/ml zu dem mit stickstoffhaltigen Verbindungen belasteten Abwasser gegeben. Gemäß einer Ausführungsform wird die Menge des zum mit stickstoffhaltigen Verbindungen belasteten Abwasser gegebenen smektitischen Schichtsilikats geringer als 20 g/ 100 ml, gemäß einer weiteren Ausführungsform geringer als 10 g/ 100 ml gewählt.

Wie bereits erläutert, kann das smektitische Schichtsilikat an sich in beliebiger Weise mit dem mit stickstoffhaltigen Verbindungen belasteten Abwasser in Kontakt gebracht werden. So kann das smektitische Schichtsilikat beispielsweise stationär in Form einer Filterpackung oder einer Säule bereitgestellt sein, über welche dann das zu reinigende, mit stickstoffhaltigen Verbindungen belastete Abwasser geleitet wird. Eine solche Ausführungsform ist beispielsweise für smektitische Schichtsilikate geeignet, die eine sehr geringe Quellfähigkeit aufweisen.

Gemäß einer Ausführungsform ist vorgesehen, dass das smektitische Schichtsilikat in Form eines Pulvers oder Granulats zu dem mit stickstoffhaltigen Verbindungen belasteten Abwasser gegeben wird. Das Pulver bzw. das Granulat kann dabei trocken zum mit stickstoffhaltigen Verbindungen belasteten Abwasser gegeben werden und beispielsweise in dieses eingerührt werden.

Das Pulver bzw. das Granulat weist vorzugsweise eine mittlere Korngröße D₅₀ von weniger als 1 mm, bevorzugt weniger als 0,5 mm auf. Gemäß einer Ausführungsform wird die Korngröße des Pulvers bzw. Granulats größer als 50 µm, gemäß einer weiteren Ausführungsform größer als 100 µm gewählt.

Die mittlere Korngröße D₅₀ kann beispielsweise durch Siebanalyse ermittelt werden.

Gemäß einer Ausführungsform wird das smektitische Schichtsilikat in Form einer Suspension in Wasser bereitgestellt und die Suspension dann zum mit stickstoffhaltigen Verbindungen belasteten Abwasser gegeben. Es hat sich gezeigt, dass die Entfernung der stickstoffhaltigen Verbindungen, insbesondere Ammoniumverbindungen, effizienter verläuft, wenn das smektitische Schichtsilikat in Form einer Suspension zum Abwasser gegeben wird. Die Erfinder nehmen an, ohne an diese Theorie gebunden sein zu wollen, dass das smektitische Schichtsilikat in Wasser zunächst vorgequollen wird und dadurch die stickstoffhaltige Verbindung, insbesondere Ammoniumverbindung, leichter von dem smektitischen Schichtsilikat aufgenommen wird. Als flüssige Phase, in welcher das smektitische Schichtsilikat suspendiert wird, wird vorzugsweise Wasser verwendet. Bevorzugt wird reines Wasser verwendet. Dem Wasser können jedoch noch weitere Lösungsmittel zugegeben sein. Beispielsweise ist es möglich, Mischungen aus Wasser und Alkohol zu verwenden. Beispielhafte Alkohole sind Ethanol und Propanol. Sofern neben Wasser weitere Lösungsmittel verwendet werden, so wird deren Anteil gemäß einer Ausführungsform kleiner als 20 Gew.-%, gemäß einer weiteren Ausführungsform kleiner als 10 Gew.-% und gemäß einer weiteren Ausführungsform kleiner als 5 Gew.-% gewählt.

Bevorzugt weist die Suspension des smektitischen Schichtsilikats, welche zum Abwasser gegeben wird, einen Feststoffgehalt von 2,5 bis 20 g/l, gemäß einer weiteren Ausführungsform einen Feststoffgehalt von 5 bis 15 g/l auf.

Das Granulat kann an sich auf beliebige Weise und mit üblichen Methoden hergestellt worden sein.

Die Umsetzung des smektitischen Schichtsilikats mit der stickstoffhaltigen Verbindung verläuft relativ rasch, sodass kurze Behandlungszeiten möglich sind. Die Behandlungszeit ist dabei von der Menge bzw. der Konzentration der im Abwasser enthaltenen stickstoffhaltigen Verbindung sowie von der Menge des eingesetzten smektitischen Schichtsilikats abhängig.

Gemäß einer Ausführungsform wird für die Umsetzung des smektitischen Schichtsilikats mit dem mit stickstoffhaltigen Verbindungen belasteten Abwasser eine Behandlungszeit von weniger als 30 Minuten, gemäß einer Ausführungsform eine Behandlungszeit von weniger als 10 Minuten gewählt. Gemäß einer Ausführungsform wird die Behandlungszeit länger als 30 Sekunden, gemäß einer weiteren Ausführungsform länger als 1 Minute gewählt.

Das erfindungsgemäße Verfahren ermöglicht eine effiziente Entfernung von stickstoffhaltigen Verbindungen aus belastetem Abwasser. Vorzugsweise wird das erfindungsgemäße Verfahren in der Weise durchgeführt, dass das gereinigte Abwasser einen Gehalt an der stickstoffhaltigen Verbindung von weniger als 800 ppm, bevorzugt von weniger als 600 ppm, gemäß einer weiteren Ausführungsform von weniger als 500 ppm und gemäß einer weiteren Ausführungsform von weniger als 400 ppm aufweist. Die Angaben beziehen sich auf das Gewicht und sind auf der Basis von Ammoniumhydroxid (NH₄OH) berechnet.

Das von dem gereinigten Abwasser abgetrennte, mit der stickstoffhaltigen Verbindung beladene Tonmaterial kann in geeigneter Weise aufgearbeitet und beispielsweise verbrannt werden.

Die bei der Synthese von Zeolithen verwendeten Template sind jedoch relativ teuer, sodass gemäß einer weiteren Ausführungsform des erfindungsgemäßen Verfahrens die stickstoffhaltige Verbindung aus dem mit stickstoffhaltigen Verbindungen beladenen Tonmaterial zurückgewonnen wird. Dazu kann die stickstoffhaltige Verbindung beispielsweise mit einer geeignet hoch konzentrierten Lösung eines Alkalimetallsalzes aus dem Tonmaterial verdrängt werden. Geeignet kann dazu gemäß einer Ausführungsform eine Lösung eines Alkalimetallsalzes verwendet werden, welche eine Konzentration von vorzugsweise im Bereich von 1 bis 10 g/l aufweist. Geeignete Alkalimetallsalze sind beispielsweise NaCl, NaSO₄, Na₃PO₄. Es ist aber beispielsweise auch möglich, die an das smektitische Schichtsilikat gebundene stickstoffhaltige Verbindung mit Hilfe einer Säure zu eluieren. Geeignete Säure sind beispielsweise Schwefelsäure oder Salzsäure. Eine geeignete Konzentration der Säure kann beispielsweise in Vorversuchen ermittelt werden. Es ist aber auch möglich, einen Elutionsgradienten zu verwenden.

Das erfindungsgemäße Verfahren wird im Weiteren anhand von Beispielen unter Bezugnahme auf die beigefügten Figuren näher erläutert. Dabei zeigt:

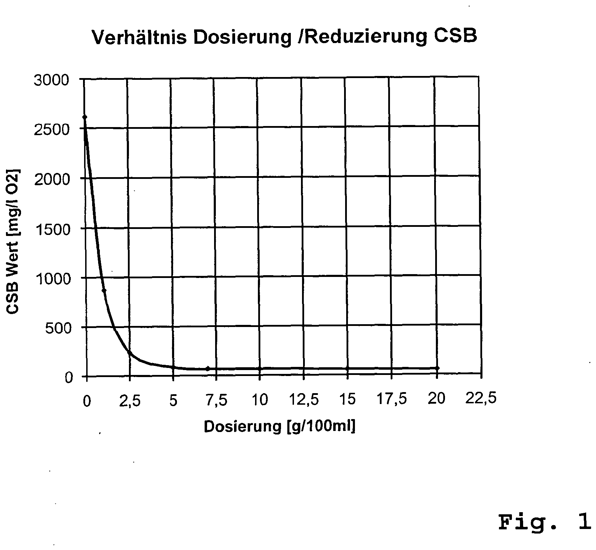

- Fig. 1:: Eine Kurve, bei welcher die für die Reinigung eines Abwassers verwendete Menge an smektitischem Schichtsilikat gegen den CSB-Wert aufgetragen ist.

### Bestimmungsmethoden:

### BET-Oberfläche/Porenvolumen nach BJH und BET:

Die Oberfläche und das Porenvolumen wurden mit einem vollautomatischen Stickstoffporosimeter der Firma Mikromeritics, Typ ASAP 2010 bestimmt.

Die Probe wird im Hochvakuum auf die Temperatur von flüssigem Stickstoff abgekühlt. Anschließend wird kontinuierlich Stickstoff in die Probenkammer dosiert. Durch die Erfassung der adsorbierten Gasmenge als Funktion des Druckes wird bei konstanter Temperatur eine Adsorptionsisotherme ermittelt. Nach einem Druckausgleich wird das Analysengas schrittweise entfernt und eine Desorptionsisotherme aufgenommen.

Zur Ermittlung der spezifischen Oberfläche und der Porosität nach der BET-Theorie werden die Daten gemäß DIN 66131 ausgewertet.

Das Porenvolumen wird ferner aus den Messdaten unter Anwendung der BJH-Methode ermittelt (E.P. Barret, L.G.Joiner, P.P. Haienda, J. Am. Chem. Soc. 73 (1951, 373). Bei diesem Verfahren werden auch Effekte der Kapillarkondensation berücksichtigt. Porenvolumina bestimmter Porengrößenbereiche werden durch Aufsummieren inkrementeller Porenvolumina bestimmt, die aus der Auswertung der Adsorptionsisotherme nach BJH erhalten werden. Das Gesamtporenvolumen nach der BJH-Methode bezieht sich auf Poren mit einem Durchmesser von 1,7 bis 300 nm.

### Ionenaustauschkapazität:

Zur Bestimmung der Kationenaustauschkapazität wird das zu untersuchende Tonmaterial über einen Zeitraum von 2 Stunden bei 105°C getrocknet. Danach wird das getrocknete Tonmaterial mit einem Überschuss an wässriger 2N NH₄Cl-Lösung 1 Stunde unter Rückfluss zur Reaktion gebracht. Nach einer Standzeit von 16 Stunden bei Raumtemperatur wird filtriert, worauf der Filterkuchen gewaschen, getrocknet und vermahlen wird und der NH₄-Gehalt im Tonmaterial durch Stickstoffbestimmung (CHN-Analysator "Vario EL III" der Firma Elementar in Hanau) nach den Herstellerangaben ermittelt. Der Anteil und die Art der ausgetauschten Metallionen wird im Filtrat durch ICP-Spektroskopie bestimmt.

### Bestimmung des Montmorillonitgehalts über die Methylenblauadsorption

Der Methylenblauwert ist ein Maß für die innere Oberfläche der Tonmaterialien.
a) Herstellung einer Tetranatriumdiphosphat-Lösung
   5,41 g Tetranatriumdiphosphat werden auf 0,001 g genau in einen 1000 ml Messkolben eingewogen und unter Schütteln bis zur Eichmarke mit dest. Wasser aufgefüllt.
b) Herstellung einer 0,5 %-igen Methylenblaulösung
   In einem 2000 ml Becherglas werden 125 g Methylenblau in ca. 1500 ml dest. Wasser gelöst. Die Lösung wird abdekantiert und auf 25 l mit dest. Wasser aufgefüllt. 0,5 g feuchter Testbentonit mit bekannter innerer Oberfläche werden in einem Erlenmeyerkolben auf 0,001 g genau eingewogen. Es werden 50 ml Tetranatriumdiphosphatlösung zugegeben und die Mischung 5 Minuten zum Sieden erhitzt. Nach dem Abkühlen auf Raumtemperatur werden 10 ml 0,5 molare H₂S0₄ zugegeben und 80 bis 95 % des zu erwartenden Endverbrauchs an Methylenblaulösung zugegeben. Mit dem Glasstab wird ein Tropfen der Suspension aufgenommen und auf ein Filterpapier gegeben. Es bildet sich ein blau-schwarzer Fleck mit einem farblosen Hof. Es wird nun in Portionen von 1 ml weitere Methylenblaulösung zugegeben und die Tüpfelprobe wiederholt. Die Zugabe erfolgt solange, bis sich der Hof leicht hellblau färbt, also die zugegebene Methylenblaumenge nicht mehr vom Testbentonit absorbiert wird.
c) Prüfung von Tonmaterialien
   Die Prüfung des Tonmaterials wird in der gleichen Weise durchgeführt wie für den Testbentonit. Aus der verbrauchten Menge an Methylenblaulösung lässt sich die innere Oberfläche des Tonmaterials berechnen.
   381 mg Methylenblau/g Ton entsprechen nach diesem Verfahren einem Gehalt von 100 % Montmorillonit.

### Bestimmung des Schüttgewichts

Ein bei der 1000 ml Markierung abgeschnittener Messzylinder wird gewogen. Dann wird die zu untersuchende Probe mittels eines Pulvertrichters so in einem Zug in den Messzylinder eingefüllt, dass sich oberhalb des Abschlusses des Messzylinders ein Schüttkegel ausbildet. Der Schüttkegel wird mit Hilfe eines Lineals, das über die Öffnung des Messzylinders geführt wird, abgestreift und der gefüllte Messzylinder erneut gewogen. Die Differenz entspricht dem Schüttgewicht.

### Bestimmung des pH-Werts

Der pH-Wert wurde mit Hilfe einer kalibrierten Glaselektrode in einer Suspension des Tonmaterials von 10g/100 ml bestimmt.

### Bestimmung des Quellvolumens

Ein graduierter 100 ml Messzylinder wird mit 100 ml destilliertem Wasser bzw. einer wässrigen Lösung aus 1 % Soda und 2 % Trinatriumpolyphosphat gefüllt. 2 g der zu vermessenden Substanz werden langsam und portionsweise, je etwa 0,1, bis 0,2 g, mit einem Spatel auf die Oberfläche des Wassers gegeben. Nach dem Absinken einer zugegebenen Portion wird die nächste Portion zugegeben. Nachdem die 2 g Substanz zugegeben und auf den Grund des Messzylinders abgesunken sind, wird der Zylinder für eine Stunde bei Raumtemperatur stehen gelassen. Anschließend wird an der Graduierung des Messzylinders die Höhe der gequollenen Substanz in ml/2g abgelesen.

### Bestimmung des Gehalts an Tetrapropylammoniumbromid

Die Bestimmung des Gehalts an Tetrapropylammoniumbromid wird in einem Konzentrationsbereich von 0,5 bis 50 Gew.-% gravimetrisch mit Natriumtetraphenylborat vorgenommen.

0,1 bis 10 g der Analysenlösung werden in einem Becherglas genau eingewogen, mit 20 ml bidestilliertem Wasser versetzt und auf 50 °C erwärmt. Unter Rühren werden langsam 10 ml einer Lösung von 2 Gew.-% Natriumtetraphenylborat in bidestilliertem Wasser zugegeben. Nach der Zugabe wird die Probe noch 15 Minuten stehen gelassen. Der Niederschlag wird über einen zuvor gewogenen G4-Filtertiegel abfiltriert und zwei Mal mit dem Filtrat gewaschen. Der Filterkuchen wird mit bidestilliertem Wasser gewaschen und anschließend bei 120 °C bis zur Gewichtskonstanz getrocknet. Der Tiegel wird erneut gewogen und das Gewicht des Niederschlags aus der Differenz bestimmt.

### Bestimmung des CSB-Wertes

Die Bestimmung erfolgt nach DIN ISO 15705 bei 148°C mit einem kommerziell erhältlichen Test-Kit "NANOCOLOR CSB 1500" der Macherey-Nagel GmbH & Co. KG, Düren, DE. Details zur Methode sind auf der Webseite (http://www.mn-net.com) veröffentlicht und nachstehend beschrieben.

Methode: Photometrische Bestimmung der Chrom(III)-Konzentration nach Oxidation mit Kaliumdichromat /Schwefelsäure / Silbersulfat.
Messbereich: 100 - 1500 mg/l CSB
Faktor: 1740
Messwellenlänge (HW = 5-12 nm): 620 nm
Reaktionszeit: 2 h
Reaktionstemperatur: 148°C
Schnell-CSB: 30 min bei 160°C

Benötigtes Zubehör: *NANOCOLOR®* Thermoblock, Kolbenhubpipette mit Spitzen.

Aus dem Test-Kit wird eine Rundküvette entnommen und geöffnet. Der Inhalt der Rundküvette wird langsam mit 2,0 ml Probelösung überschichtet. Die Rundküvette wird fest verschraubt, in ein Sicherheitsgefäß eingesteckt, geschüttelt, und in den Thermoblock eingesetzt. Die Rundküvette wird für 2 Stunden auf 148 °C erhitzt. Anschließend wird die Rundküvette aus dem Thermoblock entnommen, nach ca. 10 min (noch warm) einmal geschüttelt und dann auf Raumtemperatur abgekühlt. Die Rundküvette wird außen gesäubert, in das Messgerät eingesetzt und die Extinktion bei 620 nm bestimmt.

Für die Beispiele wurden die in Tabelle 1 aufgeführten smektitischen Schichtsilikate verwendet.

**Tabelle 1: für Reinigungsversuche verwendete smektitische Schichtsilikate**

| | | |
|---|---|---|
| Ton 1 | natürlicher, Na-Bentonit Wyoming-Bentonit | Ceratosil |
| Ton 2 | natürlicher türkischer, mit ca. 5 Gew.-% Na₂CO₃ hoch aktivierter Calcium-Bentonit | Opazil |
| Ton 3 | natürlicher türkischer, nicht aktivierter Calcium-Bentonit | Printosil |
| Ton 4 | türkischer, nicht aktivierter Bentonit | Tonsil |
| Ton 5 | bayerischer, mit ca. 3 Gew.-% Na₂CO₃ aktivierter Calcium-Bentonit | Südflock P |

Die Eigenschaften der Schichtsilikate sind in Tabelle 2 zusammengefasst.

**Tabelle 2: Eigenschaften der für Reinigungsversuche verwendeten smektitischen Schichtsilikate**

| Ton | pH | Quellvolumen (ml/2g) | Ionenaustauschkapazität (IAK) (meq/100 g) | Anteil Na-Ionen an der IAK (%) | spezifische Oberfläche (m²/g) | Mont.-Gehalt (%) |
|---|---|---|---|---|---|---|
| Ton 1 | 8,5 | 35 | 71 | 57 | 60 | 85 |
| Ton 2 | 10,5 | 50 | 103 | 58 | 65 | 100 |
| Ton 3 | 8,2 | 6 | 57 | 10 | 85 | 72 |
| Ton 4 | 7,3 | 2 | 44 | 8 | 250 | 35 |
| Ton 5 | 9,5 | 28 | 60 | 45 | 68 | 75 |

### Beispiel 1: Reinigung eines Waschwassers durch Zugabe verschiedener smektitischer Schichtsilikate in trockener Form

Für die Durchführung der Versuche wurden jeweils 100 ml eines Waschwassers, welches bei einer industriellen Synthese eines MFI-Zeoliths angefallen war, verwendet. Das Waschwasser wies einen pH-Wert von 11 und einen Gehalt an Tetrapropylammoniumbromid von 0,19 Gew.-% sowie einen CSB-Wert von 4400 mg O₂/l auf. Der Natriumgehalt des Waschwassers betrug 478 mg/l Na, der Aluminiumgehalt betrug kleiner als 1 mg/l Al.

Das Waschwasser wurde in einem 250 ml Erlenmeyerkolben vorgelegt und mit einem Rührfisch bei ca. 930 Upm bei Raumtemperatur gerührt. Während einer Minute wurde jeweils das zu untersuchende smektitische Schichtsilikat in Form eines trockenen Granulats zugegeben und die Suspension dann für weitere 10 Minuten bei ca. 930 Upm gerührt. Die Suspension wurde über ein Membranfilter mit einer Porengröße von 0,2 mm filtriert und der pH-Wert, der Gehalt an Tetrapropylammoniumbromid (TPABr) sowie der CSB-Wert des Filtrats bestimmt. Die ermittelten Werte sind in Tabelle 3 angegeben.

Es wurde mit allen zugegebenen smektitischen Schichtsilikaten eine deutliche Verringerung der Konzentration an Tetrapropylammoniumbromid im Abwasser und in der Folge auch eine deutliche Absenkung des CSB-Wertes erreicht.

Die besten Ergebnisse werden mit dem Ton 1 erreicht, welcher eine mittlere Ionenaustauschkapazität und eine mittlere Quellfähigkeit aufweist.

Überraschend wurden mit dem hoch aktivierten Ton 2, welcher einen hohen Natriumgehalt und eine hohe Quellfähigkeit aufweist, eine deutlich schlechtere Reinigungswirkung erreicht, als mit dem weniger hoch aktivierten Ton 1.

Ebenfalls hinter der Reinigungswirkung des Tons 1 bleibt die Wirkung des Tons 3 zurück, einem Calciumbentonit, der einen niedrigen Natriumgehalt und damit eine niedrige Quellfähigkeit aufweist.

**Tabelle 3: Abreicherung von TPABr in einem Waschwasser unter Verwendung verschiedener smektitischer Schichtsilikate**

| Ton | zugegebene Menge (g, atro) | TPABr (%) | pH | CSB (mg O₂/l) |
|---|---|---|---|---|
| -- | -- | 0,19 | 11 | 4400 |
| 1 | 2,5 | < 0,01 | 10,4 | 112 |
| 1 | 5 | < 0,01 | 10,3 | 120 |
| 1 | 10 | < 0,01 | 9,8 | 118 |
| 2 | 5 | 0,07 | 10,4 | >1500 |
| 2 | 10 | 0,04 | 10 | 867 |
| 3 | 5 | 0,02 | 9,6 | 637 |
| 3 | 10 | 0,02 | 9,7 | 576 |
| 4 | 5 | 0,06 | 9,4 | 1420 |
| 4 | 10 | 0,05 | 9,15 | 1280 |

### Beispiel 2: Reinigung eines Waschwassers durch Zugabe verschiedener smektitischer Schichtsilikate in Form einer wässrigen Aufschlämmung

Beispiel 1 wurde wiederholt, wobei das smektitische Schichtsilikat jedoch in Form einer wässrigen Aufschlämmung zugegeben wurde. Die Aufschlämmung wurde hergestellt, indem das betreffende smektitische Schichtsilikat bei Raumtemperatur in destilliertem Wasser aufgeschlämmt und dann für 20 Minuten gerührt wurde. Die Suspension wurde zum zu reinigenden Waschwasser gegeben. Die Ergebnisse sind in Tabelle 4 enthalten.

In die Tabelle 4 ist der Feststoffgehalt der Suspension angegeben, welche zum zu reinigenden Waschwasser gegeben wird, sowie die absolute Menge des zugegebenen smektitischen Schichtsilikats ("atro": absolut trocken)

**Tabelle 4: Abreicherung von TPABr in einem Waschwasser unter Verwendung von Suspensionen verschiedener smektitischer Schichtsilikate**

| Ton | Feststoffgehalt (Gew.-%) | Menge (g, atro) | TPABr (%) | pH | CSB (mg O₂/l) |
|---|---|---|---|---|---|
| -- | -- | -- | 0,19 | 11 | 4400 |
| 1 | 7,1 | 2,5 | 0,01 | 9,8 | 102 |
| 1 | 7,1 | 5 | 0,01 | 9,1 | 76 |
| 1 | 7,1 | 10 | < 0,01 | 9,1 | 80 |
| 2 | 3,5 | 5 | < 0,01 | 9,8 | 367 |
| 2 | 3,5 | 10 | < 0,01 | 9,8 | 338 |
| 3 | 19,6 | 5 | 0,02 | 9,7 | 727 |
| 3 | 19,6 | 10 | 0,02 | 9,4 | 437 |
| 4 | 7,0 | 5 | 0,05 | 9, 65 | 1164 |
| 4 | 7,0 | 10 | 0,04 | 8,9 | 660 |

Wird das smektitische Schichtsilikat vor der Zugabe zum zu reinigenden Waschwasser zunächst in Wasser aufgeschlämmt, wird im Vergleich zur Zugabe als trockenes Pulver eine bessere Reinigungswirkung erzielt.

### Beispiel 3: Einfluss der Dosierung des smektitischen Schichtsilikats auf die Reinigungswirkung

Analog zu Beispiel 1 wurden jeweils 100 ml eines Waschwassers, wie es bei der Synthese eines MFI-Zeoliths anfällt, innerhalb einer Minute mit unterschiedlichen Mengen des Tons 5 (Wassergehalt: 8,25 Gew.-%) versetzt. Die Menge des eingesetzten smektitischen Schichtsilikats sowie die für das Filtrat ermittelten CSB-Werte sind in Tabelle 5 angegeben.

**Tabelle 5: CSB-Werte für ein mit verschiedenen Mengen des Tons 5 behandeltes stickstoffbelastetes Waschwasser**

| Menge (g) | Rührzeit (min) | pH | CSB-Wert (mg O₂/l) | Reduzierung des CSB (%) |
|---|---|---|---|---|
| 0 | -- | 10,52 | 2616 | |
| 1 | 10 | 10,27 | 867 | 66,86 |
| 2,5 | 10 | 10,00 | 233 | 91,09 |
| 5 | 10 | 9,79 | 88,2 | 96,63 |
| 7 | 30 | 9,53 | 67,9 | 97,40 |
| 10 | 10 | 9,34 | 64,1 | 97,55 |
| 15 | 10 | 9,08 | 57,9 | 97,79 |
| 20 | 10 | 8,81 | 55,4 | 97,88 |

Die bei der Versuchsreihe ermittelten CSB-Werte sind in Figur 1 in Form einer Kurve graphisch wiedergegeben. Man erreicht bei geringer Dosierung bereits eine deutliche Absenkung des CSB-Wertes, welcher sich mit zunehmender Menge an smektitischem Schichtsilikat einem niedrigen konstanten Niveau annähert.

### Beispiel 4: Vergleich verschiedener Rührzeiten und Dosiermengen

Analog zu Beispiel 3 wurden in 100 ml eines Waschwassers aus einer industriellen Synthese eines MFI-Zeoliths jeweils die in Tabelle 6 angegebene Menge des Tons 6 während einer Minute eingerührt. Anschließend wurde die Suspension noch für die in Tabelle 6 angegebene Zeit weiter gerührt und die Suspension dann über ein Papierfaltenfilter filtriert. Für das Filtrat wurde jeweils der pH-Wert und der CSB-Wert bestimmt. Die Daten sind in Tabelle 6 zusammengefasst.

Tabelle 6: Vergleich verschiedener Rührzeiten und Dosiermengen bei einer Reinigung eines Waschwassers mit Ton 5

| Menge (g) | Rührzeit (min) | pH Filtrat | CSB Filtrat |
|---|---|---|---|
| 1 | 10 | 10,07 | 845 |
| 2,5 | 10 | 9,8 | 223 |
| 5 | 10 | 9,57 | 81 |
| 2,5 | 30 | 9,7 | 222 |

Der CSB-Wert lässt sich bereits bei kurzen Behandlungszeiten deutlich absenken. Wird die Behandlungszeit verlängert, kann bei gegebener Menge an smektitischem Schichtsilikat der CSB-Wert noch weiter abgesenkt werden.

## Patentansprüche

1. Verfahren zur Reinigung eines mit stickstoffhaltigen Verbindungen belasteten Abwassers zum Erhalt eines gereinigten Abwassers, wobei das Verfahren umfasst:
Umsetzen des mit stickstoffhaltigen Verbindungen belasteten Abwassers mit einem smektitischen Schichtsilikat zum Erhalt eines mit stickstoffhaltigen Verbindungen beladenen Tonmaterials, und
Abtrennen des mit stickstoffhaltigen Verbindungen beladenen Tonmaterials von dem belasteten Abwasser,
wobei das smektitische Schichtsilikat eine Ionenaustauschkapazität von 50 bis 85 meq/100 g aufweist, wobei die stickstoffhaltige Verbindung eine quaternäre Alkylammoniumverbindung ist und wobei das mit stickstoffhaltigen Verbindungen belastete Abwasser aus einer Synthese eines Zeoliths erhalten worden ist.

2. Verfahren nach Anspruch 1, wobei die quaternäre Alkylammoniumverbindung Alkylgruppen trägt, die eine Kohlenstoffzahl von weniger als 6 aufweisen.

3. Verfahren nach Anspruch 1 oder 2, wobei der Anteil der stickstoffhaltigen Verbindung im mit stickstoffhaltigen Verbindungen belasteten Abwasser kleiner als 5000 mg/l N ist.

4. Verfahren nach Anspruch 1, wobei das mit stickstoffhaltigen Verbindungen belastete Abwasser eine Konzentration an Alkaliionen von weniger als 15000 mg/l X⁺ aufweist, wobei X⁺ für ein Alkalimetallion steht.

5. Verfahren nach einem der vorhergehenden Ansprüche, wobei das mit stickstoffhaltigen Verbindungen belastete Abwasser eine Konzentration an Aluminiumionen von weniger als 15 mg/l Al³⁺ aufweist.

6. Verfahren nach einem der vorhergehenden Ansprüche, wobei das belastete Abwasser einen pH-Wert von mehr als 10 aufweist.

7. Verfahren nach einem der vorhergehenden Ansprüche, wobei das smektitische Schichtsilikat ein neutrales oder ein alkalisch aktiviertes smektitisches Schichtsilikat ist.

8. Verfahren nach einem der vorhergehenden Ansprüche, wobei das smektitische Schichtsilikat einen Gehalt an mit Ammoniumionen extrahierbaren Natriumionen aufweist, der zwischen 80 und 140 % der Ionenaustauschkapazität des smektitischen Schichtsilikats beträgt.

9. Verfahren nach einem der vorhergehenden Ansprüche, wobei das smektitische Schichtsilikat eine Quellfähigkeit in Wasser im Bereich von 15 bis 40 ml/2g aufweist.

10. Verfahren nach einem der vorhergehenden Ansprüche, wobei das smektitische Schichtsilikat in einer Menge von mehr als 1 g/100 ml zu dem mit stickstoffhaltigen Verbindungen belasteten Abwasser gegeben wird.

11. Verfahren nach einer der vorhergehenden Ansprüche, wobei das smektitische Schichtsilikat in Form einer Suspension zu dem mit stickstoffhaltigen Verbindungen belasteten Abwasser gegeben wird.

12. Verfahren nach Anspruch 11, wobei die Suspension einen Feststoffgehalt von 2,5 bis 20 Gew.-% aufweist.

13. Verfahren nach einem der vorhergehenden Ansprüche, wobei das gereinigte Abwasser einen Gehalt an der stickstoffhaltigen Verbindung von weniger als 800 ppm aufweist.

14. Verfahren nach einem der vorhergehenden Ansprüche, wobei für die Umsetzung des smektitischen Tonminerals mit dem mit stickstoffhaltigen Verbindungen belasteten Abwasser eine Behandlungszeit von weniger als 10 Minuten gewählt wird.

15. Verfahren zur Rückgewinnung von stickstoffhaltigen Verbindungen aus einem Abwasser umfassend:
Erzeugen eines mit den stickstoffhaltigen Verbindungen beladenen Tonmaterials durch Durchführen des Verfahrens gemäß einem der Ansprüche 1 bis 14, und
Rückgewinnen der stickstoffhaltigen Verbindung aus dem mit den stickstoffhaltigen Verbindungen beladenen Tonmaterial, gegebenenfalls durch Verdrängen der stickstoffhaltigen Verbindung aus dem Tonmaterial mit einer Lösung eines Alkalimetallsalzes, durch Eluieren mit einer Säure und/oder durch Verwenden eines Elutionsgradienten.

## Claims

1. Method for purifying wastewater loaded with nitrogen-containing compounds to obtain purified wastewater, wherein said method comprises:
reacting the wastewater loaded with nitrogen-containing compounds with a smectic sheet silicate to obtain a clay material loaded with nitrogen-containing compounds, and
separating off the clay material loaded with nitrogen-containing compounds from the loaded wastewater,
wherein the smectic sheet silicate has an ion exchange capacity of from 50 to 85 meq/100, wherein the nitrogen-containing compound is a quaternary alkyl ammonium compound and wherein the wastewater loaded with nitrogen-containing compounds has been obtained from a synthesis of a zeolite.

2. Method according to Claim 1, wherein the quaternary alkyl ammonium compound carries alkyl groups which have a carbon count of less than 6.

3. Method according to Claim 1 or 2, wherein the level of the nitrogen-containing compound in the wastewater loaded with nitrogen-containing compounds is less than 5000 mg/l N.

4. Method according to Claim 1, wherein the wastewater loaded with nitrogen-containing compounds has a concentration of alkali ions of less than 15000 mg/l X⁺, wherein X⁺ stands for an alkali metal ion.

5. Method according to one of the previous claims, wherein the wastewater loaded with nitrogen-containing compounds has a concentration of aluminium ions of less than 15 mg/l Al³⁺.

6. Method according to one of the previous claims, wherein the loaded wastewater has a pH of more than 10.

7. Method according to one of the previous claims, wherein the smectic sheet silicate is a neutral or an alkali-activated smectic sheet silicate.

8. Method according to one of the previous claims, wherein the smectic sheet silicate has a content of sodium ions extractable with ammonium ions which is between 80 and 140 % of the ion exchange capacity of the smectic sheet silicate.

9. Method according to one of the previous claims, wherein the smectic sheet silicate has a swelling capacity in water in the range of from 15 to 40 ml/2g.

10. Method according to one of the previous claims, wherein the smectic sheet silicate is added in a quantity of more than 1 g/100 ml to the wastewater loaded with nitrogen-containing compounds.

11. Method according to one of the previous claims, wherein the smectic sheet silicate is added in the form of a suspension to the wastewater loaded with nitrogen-containing compounds.

12. Method according to Claim 11, wherein the suspension has a solids content of from 2.5 to 20 wt.-%.

13. Method according to one of the previous claims, wherein the purified wastewater contains less than 800 ppm of the nitrogen-containing compound.

14. Method according to one of the previous claims, wherein a treatment time of less than 10 minutes is chosen for the reaction of the smectic clay mineral with the wastewater loaded with nitrogen-containing compounds.

15. Method for recovering nitrogen-containing compounds from a wastewater, comprising:
producing a clay material loaded with the nitrogen-containing compounds by performing the method according to any of Claims 1 to 14, and
recovering the nitrogen-containing compound from the clay material loaded with the nitrogen-containing compounds, optionally by displacing the nitrogen-containing compound from the clay material with a solution of an alkali metal salt, by eluting with an acid and/or by using an elution gradient.

## Revendications

1. Procédé de purification d'une eau résiduaire chargée avec des composés azotés pour obtenir une eau résiduaire purifiée, le procédé comprenant :
la mise en réaction de l'eau résiduaire chargée avec des composés azotés avec un phyllosilicate smectitique pour obtenir un matériau argileux chargé avec des composés azotés, et
la séparation du matériau argileux chargé avec des composés azotés de l'eau résiduaire chargée,
le phyllosilicate smectitique présentant une capacité d'échange d'ions de 50 à 85 méq./100 g, le composé azoté étant un composé d'alkylammonium quaternaire et l'eau résiduaire chargée avec des composés azotés ayant été obtenue à partir d'une synthèse d'une zéolithe.

2. Procédé selon la revendication 1, dans lequel le composé d'alkylammonium quaternaire porte des groupes alkyle qui présentent un nombre de carbones de moins de 6.

3. Procédé selon la revendication 1 ou 2, dans lequel la proportion du composé azoté dans l'eau résiduaire chargée avec des composés azotés est inférieure à 5 000 mg/l de N.

4. Procédé selon la revendication 1, dans lequel l'eau résiduaire chargée avec des composés azotés présente une concentration en ions alcalins de moins de 15 000 mg/l de X⁺, X⁺ représentant un ion de métal alcalin.

5. Procédé selon l'une quelconque des revendications précédentes, dans lequel l'eau résiduaire chargée avec des composés azotés présente une concentration en ions aluminium de moins de 15 mg/l d'Al³⁺.

6. Procédé selon l'une quelconque des revendications précédentes, dans lequel l'eau résiduaire chargée présente un pH de plus de 10.

7. Procédé selon l'une quelconque des revendications précédentes, dans lequel le phyllosilicate smectitique est un phyllosilicate smectitique neutre ou activé alcaliniquement.

8. Procédé selon l'une quelconque des revendications précédentes, dans lequel le phyllosilicate smectitique présente une teneur en ions sodium pouvant être extraits avec des ions ammonium qui est comprise entre 80 et 140 % de la capacité d'échange d'ions du phyllosilicate smectitique.

9. Procédé selon l'une quelconque des revendications précédentes, dans lequel le phyllosilicate smectitique présente une capacité de gonflement dans l'eau dans la plage allant de 15 à 40 ml/2 g.

10. Procédé selon l'une quelconque des revendications précédentes, dans lequel le phyllosilicate smectitique est ajouté en une quantité de plus de 1 g/100 ml à l'eau résiduaire chargée avec des composés azotés.

11. Procédé selon l'une quelconque des revendications précédentes, dans lequel le phyllosilicate smectitique est ajouté sous la forme d'une suspension à l'eau résiduaire chargée avec des composés azotés.

12. Procédé selon la revendication 11, dans lequel la suspension présente une teneur en solides de 2,5 à 20 % en poids.

13. Procédé selon l'une quelconque des revendications précédentes, dans lequel l'eau résiduaire purifiée présente une teneur en le composé azoté de moins de 800 ppm.

14. Procédé selon l'une quelconque des revendications précédentes, dans lequel une durée de traitement de moins de 10 minutes est choisie pour la réaction du minéral argileux smectitique avec l'eau résiduaire chargée avec des composés azotés.

15. Procédé de récupération de composés azotés à partir d'une eau résiduaire, comprenant :
la formation d'un matériau argileux chargé avec les composés azotés par réalisation du procédé selon l'une quelconque des revendications 1 à 14, et
la récupération du composé azoté à partir du matériau argileux chargé avec les composés azotés, éventuellement par déplacement du composé azoté hors du matériau argileux avec une solution d'un sel de métal alcalin, par élution avec un acide et/ou par utilisation d'un gradient d'élution.
